# EUROPEAN PATENT SPECIFICATION

(11) **EP 2 629 695 B1**
(45) Date of publication and mention of the grant of the patent: **25.07.2018**
(21) Application number: 11771148.1
(22) Date of filing: 19.10.2011
(51) Int. Cl.: A61C 8/00

(54) **A DENTAL COMPONENT, A DENTAL FIXTURE AND A DENTAL IMPLANT ASSEMBLY**
ZAHNKOMPONENTE, ZAHNIMPLANTATFIXIERUNG UND ZAHNIMPLANTATANORDNUNG
COMPOSANT DENTAIRE, SYSTÈME DE FIXATION DENTAIRE ET ENSEMBLE IMPLANT DENTAIRE

(30) Priority: 20.10.2010 US 394883 P; 20.10.2010 EP 10188218
(43) Date of publication of application: 28.08.2013
(73) Proprietor: Dentsply IH AB, 431 21 Mölndal (SE)
(72) Inventor: HOLMSTRÖM, Johan, S-428 37 Kållered (SE); WENDEL, Mats, S-435 42 Mölnlycke (SE); MARKLUND, Mattias, S-411 35 Göteborg (SE)
(74) Representative: AWA Sweden AB
(86) International application number: PCT/EP2011/068265
(87) International publication number: WO 2012/052480

(56) References cited:
- EP-A2- 1 444 964
- WO-A1-01/28451
- US-A1- 2005 136 380
- US-A1- 2008 096 168
- US-B1- 6 227 859
- US-B1- 6 382 977

## Description

### Technical field

The present invention relates to a dental component, comprising an engagement portion for engaging the dental component with a dental fixture adapted to be inserted into a jawbone. The present invention also relates to a dental fixture for insertion into a jawbone. Also, the present invention relates to a dental implant assembly comprising a dental component and a dental fixture.

### Background of the Invention

A frequent way today to restore a damaged or lost tooth is to install a dental implant comprising a fixture in the adjacent jawbone tissue (maxilla or mandible) and replace the damaged or lost tooth with a dental prosthesis. A superstructure, such as an abutment, may be used as a connection between the dental prosthesis and the installed fixture.

There are various fixture configurations. For instance, a fixture may have a flat topped coronal head portion, which may be installed in any rotational position relative to the jawbone. Another type of fixture configuration is a fixture having a sloped coronal end portion, such as disclosed in US 6,655,961, in which the length of the fixture is greater on the lingual side than on the buccal side in order to match the contour of the jawbone. Since fixtures are quite small, around 10 mm, it may be quite difficult for a dentist to see the orientation of the slope of the fixture during the process of inserting the fixture into the jawbone. It follows that there is a risk that, when the fixture is in its installed position in the jawbone, the sloped coronal end portion is not oriented correctly and does not follow the contours of the jawbone as intended. Thus, it would be desirable to ensure that the dentist installs the sloped fixture with correct orientation, without restricting his/her freedom of handling/installing other fixtures, such as flat topped fixtures, that do not have a designated rotational orientation with respect to the jawbone.

Similarly, to the above described fixture/jawbone-interface, for a superstructure, such as an abutment, there may be an abutment/fixture-interface in which the abutment may be positioned in various rotational positions relative to the fixture, and there may be an abutment/fixture-interface in which the abutment should only be positioned in one way relative to the fixture (e.g. an abutment having a sloped portion matching the sloped head portion of a fixture). Thus, also with regard to this interface, it would be desirable to ensure that the dentist connects the superstructure with a correct rotational orientation relative to certain fixtures, without restricting his/her freedom of action when connecting superstructures to other fixtures that do not have a designated mutual rotational orientation with respect to each other.

EP 1 444 964 A2 discloses a dental fixture having a plurality of projections around the implant. A larger space separates two of the projections than the spaces between other ones of said plurality of projections. A dental component is also provided for mating with the fixture.

### Summary of the Invention

The present invention is based on the insight that one and the same dental component can be used to restrict the freedom of action in connection with a first type of fixture, while not restricting the freedom of action when used in connection with a second type of fixture.

According to at least a first aspect of the invention, a dental component is provided. The dental component comprises an engagement portion for engaging the dental component with a dental fixture adapted to be inserted into a jawbone, the engagement portion being provided with at least two equally-dimensioned primary radial projections which are distributed along the circumference of the engagement portion and which are adapted to be received in corresponding recesses provided in the fixture, wherein, following the circumference of the engagement portion, a first distance separates a first primary radial projection and a second primary radial projection of said primary projections, and a second distance separates said second primary radial projection and a subsequent primary radial projection of said primary projections, wherein said first distance is larger than said second distance, and wherein the engagement portion area bridged by said first distance is either void of projections or provided with a secondary radial projection which in at least one direction is smaller than each one of said primary radial projections, wherein the engagement portion is provided with a set of primary radial projections, which are equidistantly distributed around the circumference of the engagement portion and at least one additional primary radial projection which is interposed between two neighboring projections of said equidistantly distributed set of primary radial projections.

Thus, by having this displaced distribution of primary projections, the dental component can have a single possible rotational orientation/position with one type of fixture, but several possible rotational orientations/positions with another type of fixtures. For instance, a fixture having recesses which can receive said projections and which are circumferentially distributed in correspondence with said projections, can only receive the dental component in one designated rotational position. On the other hand, a fixture which has one or more additional recesses for receiving said primary projections may receive the dental component in any one of a plurality of rotational positions. A fixture having said additional recesses may suitably, although not necessarily, have its recesses symmetrically spaced along the inner perimeter of the socket wall.

It should be noted that said primary projections are equally-dimensioned projections. If a secondary projection is present its extension in one direction is smaller than the extension of any one of the primary extensions in the corresponding direction. Since the projections are spaced from each other around the circumference of the engagement portion, the above expression "extension in one direction" should be understood to be related to a coordinate system having radial, circumferential (angular) and longitudinal coordinates. For instance, the secondary projection may have a shorter radial extension then the primary projections, or a shorter extension in the circumferential direction, or even a shorter extension in a direction perpendicular to the radial direction, etc.

According to at least one example embodiment, the engagement portion is provided with at least three of said primary radial projections, one of which is interposed between the other two and separated by the same distance from the other two.

According to the first aspect of the invention, the engagement portion is provided with a set of primary radial projections, which are equidistantly distributed around the circumference of the engagement portion and at least one additional primary radial projection which is interposed between two neighboring projections of said equidistantly distributed set of primary radial projections.

Both of the just described distributions would, for instance, include a set of six equidistantly distributed projections, and a seventh projection interposed between two neighboring projections of said set of projections. Thus, the seventh projection will together with the two surrounding projections form a triple located closer to each other than any other triple of projections.

According to at least one example embodiment, the engagement portion has an outer wall portion, wherein the primary (and any secondary) projections project from the wall portion and in a direction away from a central longitudinal axis of the dental component. In such case, the engagement portion may be inserted into a socket which extends apically from a coronal end of a dental fixture. The dental fixture may be of a sub-merged type, i.e. substantially the entire fixture is intended to be inserted into the jawbone. Thus, the socket will mainly be located below the level of the bone ridge. Alternatively, the dental fixture may of non-submerged type, e.g. a head portion of the fixture extends above the bone ridge in the installed state of the fixture, in which case the socket will be located at least above the bone ridge (and possibly also extending apically in the fixture to a level below the bone ridge). Furthermore, in case of a non-submerged type of fixture, the fixture may be a transgingival dental fixture, i.e. extending through the soft gingival tissue. Although some non-submerged type fixtures may have a socket for receiving the engagement portion, others may have a head portion with an outer wall portion to be enclosed by the dental component. The latter alternative is reflected in the following embodiment.

According to at least one example embodiment, the engagement portion has an internal wall portion, wherein the primary (and any secondary) projections project from the wall portion towards a central longitudinal axis of the dental component. Thus, the projections are distributed along an inner perimeter of the engagement portion. The engagement portion is adapted to embrace a head portion of the non-submerged (e.g. transgingival) dental fixture.

A dental component comprising three or more primary projections is reflected in at least one example embodiment, according to which the engagement portion is provided with a plurality of said primary radial projections distributed along the circumference (inner or outer perimeter) of the engagement portion, wherein said first distance separates a first pair of neighboring primary projections, and said second distance separates any other pair of neighboring primary projections, wherein, between said first pair of neighboring projections, the engagement portion is either void of projections or provided with a secondary radial projection which in at least one direction is smaller than said primary radial projections.

If a dental component has a secondary smaller projection present in the engagement portion area bridged by said first distance, then a fixture in relation to which only one rotational position is intended should have a corresponding smaller recess which can only receive the secondary smaller projection but not the other primary larger projections. A fixture in which the dental component is allowed to be positioned in several rotational positions will instead of said smaller recess have a large recess which can also receive the primary larger projections. A secondary smaller projection means that at least a portion of the projection is smaller in at least one direction, e.g. the radial direction, circumferential direction, axial direction.

The above-mentioned first distance and second distance are to be measured in the circumferential direction. Thus, if the engagement portion is circular, then the distance will be a length of arc *s* = *αr,* where *α* is the angle in radians (rad) between the measurement points viewed from the circle center and *r* is the radius of the circle. Also, the above-mentioned first distance and second distance are to be measured at the same level along the fixture axis (i.e. same level in the coronal-apical direction). The measurement is made from the edge of the primary projections, i.e. where the space separating the primary projections starts and ends, respectively.

The possibly circular geometry is reflected in at least one example embodiment, according to which the engagement portion comprises a wall portion suitably having a circular, polygonal, such as square or hexagonal, or other suitable cross-section from which said primary projections project radially, wherein, following the circumference of the wall portion,
a first axis extending from the centre of the engagement portion to said first projection forms a first angle relative to a second axis extending from the centre of the engagement portion to said second projection,
whereas said second axis forms a second angle relative to a subsequent axis extending from the centre of the engagement portion to said subsequent projection,
wherein the first angle is a multiple integer of said second angle. For instance, the first projection and the second projection may be provided diametrically opposed to each other, i.e. they will be at a first angle of 180° (180/π rad), and a subsequent projection may be arranged half-way around the circumference, i.e. at 90° (90/π rad). The first and second angles are suitably measured from one point of a projection to a corresponding point of the other projection (e.g. from centre to centre). It should be noted that there may be additional ones of said primary projections. For instance, an additional projection may be provided between the exemplified subsequent projection and the first projection, such as at an angle of 30° (30/π rad) to said first projection. In other words there may be several "second distances" or "second angles", which fulfill the relational criteria with respect to the "first distance" and the "first angle".

Said wall portion may be an outer wall portion of an engagement portion to be inserted into a socket of a dental fixture. Alternatively, said wall portion may be an inner wall portion with an inner perimeter from which the projections project, wherein the engagement portion is adapted to be fitted over/around a head portion of a dental fixture.

The geometry of the dental component may vary between different embodiments. For instance, the geometry and configuration of the engagement portion may be embodied in different ways. Also, there are numerous conceivable configurations, geometries and locations of the projections.

According to at least one example embodiment, the engagement portion comprises a substantially cylindrical section, wherein said projections are provided at said substantially cylindrical section.

According to at least one example embodiment, the engagement portion comprises an apically tapering section, wherein said projections are provided at said apically tapering section. The apically tapering section may be advantageous for providing a conical seal with a corresponding tapering section of a fixture socket.

According to at least one example embodiment, said primary projections (and optionally also any secondary projection) have a thickness in a radial direction of the dental component, wherein said thickness is apically tapering. These apically tapering projections may be arranged on a cylindrical engagement portion or on a tapering engagement portion, and may provide a wedging effect with a fixture socket.

The dental component may be any component selected from the group consisting of an abutment, an abutment replica, a driver, a healing cap and an impression pick-up element.

According to at least one example embodiment, the dental component is in the form of an abutment comprising a body part and a screw part, wherein the body part comprises
- said engagement portion,
- a prosthesis-receiving portion which extends coronally of the fixture, and
- a through hole extending through the body part,
wherein the screw part is adapted to be inserted into the through hole and engage an internal thread of the fixture in order to secure the body part to the fixture.
Thus, one and the same abutment may be used in either a single, determined rotational position relative to a fixture or in one of a plurality of rotational positions relative to another fixture. It should be noted, that in this application, a prosthesis-receiving portion is not limited to receive a prosthetic crown, but may also function as a bridge support.

According to at least one example embodiment, the dental component is in the form of an angled abutment in which the engagement portion has a first longitudinal axis and the prosthesis-receiving portion has a second longitudinal axis, wherein the first and second longitudinal axes are inclined at a non-zero angle relative to each other. Said angle may e.g. be in the range of 5°-60°, such as 10°-50°, for instance 15°-45°. For a fixture having a sloped top portion, it may desirable to have a similarly sloping portion of the engaging abutment so that such a sloping portion follows the contour of the gingiva. Thus, in that case it is desirable to only have one indexing position for the abutment. However, to compensate for a disadvantageous direction of extension of the abutment, the prosthesis carrying portion may be inclined relative to the fixture engaging portion.

According to at least one example embodiment, the dental component is in the form of a driver for driving the fixture into the jawbone, wherein the driver is provided with a distinctive mark to indicate to a user the rotational position of the fixture relative to the jawbone as the fixture is being driven into the jawbone. While of limited advantage in connection with e.g. a flat topped fixture which does not need to be inserted in a specific rotational position in the jawbone, the greater the advantage in connection with e.g. a slope topped fixture which should be aligned with the slope of the jawbone. Thus, the driver may suitably only be connected to such a slope topped fixture in one rotational position, such that when the driver is connected to the fixture, the visible distinctive marking has a predetermined position relative to the sloping direction of the fixture. Thus, even if the user cannot see the small slope on the fixture, he/she will be able to infer the orientation of the slope from the visible distinctive marking on the driver.

According to at least one example embodiment, each one of said primary projections is located in a direction of extension of a respective radius extending from a center of the component towards the periphery of the component, wherein each one of said primary projections is asymmetrical with respect to such a direction of extension of a respective radius. This may be advantageous for a driver having not only said primary projections, but also one or more secondary smaller projections. The asymmetry should suitably be present also in a mating internal fixture socket or outer wall portion, which means that an asymmetric recess can on at least one side wall be engaged even by an underdimensioned projection. Due to the asymmetrical offset of the recesses in the fixture socket, all of the projections will be allowed to engage a recess wall, thereby enabling the fixture to be efficiently driven into the jawbone. This will be further illustrated in connection with the description of the accompanying drawings.According to at least a second aspect of the invention, a dental fixture for insertion into a jawbone is provided. The dental fixture comprises a wall provided with a set of at least two equally-dimensioned radially extending recesses, wherein the recesses are arranged along the circumference of the wall, each recess being configured to receive any one of at least two primary radial projections provided on an engagement portion of a dental component, wherein, following the circumference of the wall, a first distance separates a first recess and a second recess of said set of recesses, and a second distance separates a second recess and a subsequent recess of said set of recesses, wherein said first distance is larger than said second distance, wherein the wall area bridged by said first distance is either void of recesses or provided with a radially extending different recess which in at least one direction is smaller than each one of said recesses in said set of recesses, wherein said wall is provided with a set of radially extending recesses, which are equidistantly distributed around the circumference of the wall and at least one additional radially extending recess which is interposed between two neighboring recesses of said equidistantly distributed set of radially extending recesses.
The dental fixture according to this second aspect of the invention may suitably be in the form of a fixture having one designated orientation relative to the jawbone, e.g. a slope topped fixture. Although the recesses may substantially match the geometry of said primary projections, as an alternative they may also be substantially larger, as long as they can receive the projections. The recesses in said set of recesses are equally-dimensioned.

Said wall provided with the recesses may form part of a socket which extends apically from a coronal end of the fixture. Thus, the recesses will be distributed along the inner perimeter of such a socket wall. Alternatively, said wall may form part of an outer boundary, such as the outside of a head portion, wherein the recesses are distributed along an outer perimeter.

Three or more recesses are reflected in at least one example embodiment, according to which said set of recesses comprises a plurality of radially extending recesses distributed along the circumference of the wall, wherein said first distance separates a first pair of neighboring recesses, and said second distance separates any other pair of neighboring recesses, wherein, between said first pair of neighboring recesses, the wall is either void of recesses or provided with a radially extending different recess which in at least one direction is smaller than any recess in said set of recesses.

As previously explained with respect to the first aspect of the invention, two projections of the dental component may be provided at an angle which may be a multiple integer of one or more other angles between other projections. The corresponding angular relationship may also be present in a fixture socket or on an outer fixture wall. Thus, according to at least one example embodiment, following the circumference of the wall,
a first radial axis extending from a central longitudinal axis to said first recess forms a first angle relative to a second radial axis extending from the central longitudinal axis to said second recess, whereas said second radial axis forms a second angle relative to a subsequent radial axis extending from the central axis to said subsequent recess,
wherein the first angle is a multiple integer of said second angle.

Said wall may be in the form of an internal wall of a fixture socket. The internal wall may suitably have a circular, polygonal, such as square or hexagonal cross-section from which said recesses project radially. Said central longitudinal axis may coincide with the centre of the socket. Alternatively, said wall is an external wall of a fixture head portion, wherein the outer wall may have any one of the above-mentioned cross-sections.

Said wall of the dental fixture, as well as the recesses, may have various configurations, geometries and locations. According to at least one example embodiment, said wall comprises a substantially cylindrical wall section, wherein said recesses are provided at said substantially cylindrical wall section. According to at least another example embodiment, said wall comprises an apically tapering wall section, wherein said recesses are provided at said apically tapering wall section. The tapering wall section may provide a conical seal with a mating tapering section of the dental component (such as an abutment).

According to at least one example embodiment, each recess in said set of recesses is located in a direction of extension of a respective radius extending from a central longitudinal axis towards the wall, wherein each such recess is asymmetrical with respect to such a direction of extension of a respective radius. This displacement or offset of the recess allows also underdimensioned projections to engage at least a side wall of the recesses.

According to at least one example embodiment, said wall is provided with a set of at least three radially extending recesses, one of which is interposed between the other two and separated by the same distance from the other two.

According to the second aspect of the invention, said wall is provided with a set of radially extending recesses, which are equidistantly distributed around the circumference of the wall and at least one additional radially extending recess which is interposed between two neighboring recesses of said equidistantly distributed set of radially extending recesses.

Both of the just described distributions would, for instance, include a set of six equidistantly distributed recesses, and a seventh recess interposed between two neighboring recesses of said set of recesses. Thus, the seventh recess will together with the two surrounding recesses form a triple located closer to each other than any other triple of recesses. A dental component having a corresponding distribution of radial projections would only be receivable in one indexing position relative to the fixture.

According to at least a third aspect of the invention, a dental implant assembly is provided. The dental implant assembly comprises a dental component according to the first aspect of the invention and a fixture according to the second aspect of the invention, wherein the dental component only has one possible indexing (i.e. rotational) position relative to the fixture.

Suitably the fixture comprises a buccal side and a lingual side, wherein in the implanted state, the area of the engagement portion bridged by said first distance is adapted to be arranged in a predetermined rotational position relative to the buccal side. If said dental component is a driver, it may be provided with a distinctive visual marking to indicate the relative position with respect to the buccal side. This helps the user to insert the fixture in an appropriate rotational position relative to the jawbone. At the coronal end, the fixture may suitably have a longer extension on the lingual side compared to the buccal side.

According to at least a fourth aspect of the invention, a dental implant assembly is provided. The dental implant assembly comprises a dental component according to the first aspect of the invention and a fixture comprising a wall provided with a plurality of radially extending recesses, wherein the recesses are arranged sequentially along the circumference of the wall, each recess being shaped to receive one of said plurality of primary projections provided on the engagement portion of the dental component, wherein the number of said recesses is higher than the number of said primary projections. This may enable the dental component to be positioned in any one of a plurality of indexing (rotational) positions relative to the fixture. For instance, a dental component having three primary projections may have four indexing positions relative to a fixture having four of said recesses, if appropriately distributed. Five recesses may give five possible indexing positions, etc.

It should be understood that in the present disclosure, a dental implant may comprise a dental fixture and a superstructure, such as an abutment.

A dental fixture is for use as the anchoring member of a dental prosthesis. To this end, the dental fixture is insertable into a pre-prepared bore hole in the bone tissue of a jawbone (maxilla or mandible) at a site where the dental prosthesis is required. The dental fixture is normally rotated into the bore hole.

For screw-type dental fixtures the bore hole may be provided with internal threads in advance or may be left un-tapped with the dental fixture provided with a self-tapping capacity, e.g. by the provision of one or more axially-extending cutting recesses, edges or notches, etc in the fixture thread. For instance, an apical end portion of the fixture may be provided with 2-4 cutting recesses, such as 3 cutting recesses. Other number of cutting recesses are readily conceivable.

A superstructure for connecting a prosthetic part to the fixture may comprise an abutment, spacer or other transmucosal component which engages to the dental fixture to bridge the gingiva overlying the maxilla or mandible. The prosthetic part, e.g. a crown, bridge or denture may be secured to the abutment. There are various other forms that the superstructure can take. For instance, the prosthetic part may be secured directly to the dental fixture. A dental implant may thus comprise an abutment connected to the dental fixture, or the dental fixture without an abutment.

The term "coronal" is here and throughout this application used to indicate a direction towards a head end or trailing end of the dental implant. For instance, in a situation where an abutment is connected to a dental fixture, the coronal direction of the abutment would be a direction towards the part of the abutment being directed away from the fixture. Conversely, the term "apical" indicates a direction towards an insertion end of the component. Thus, apical and coronal are opposite directions. Furthermore, the term "axial direction" or "axially" is used throughout this application to indicate a direction taken from the coronal end to the apical end, or vice versa. The term "radial direction" or "radially" indicates a direction perpendicular to the axial direction.

A blind bore or socket may extend apically into the fixture body from the coronal end to an end surface in-between the apical and coronal ends of the fixture body for a superstructure to be secured to the fixture. The socket may comprise an internally-threaded section for screw connection of the superstructure to the fixture. A section of the socket, such as the coronal section, may be tapered towards the apical end. The tapered section is suitably arranged coronally of the internally-threaded section.

The above exemplified embodiments have taught that the radially projecting recesses may be provided on an internal wall in a fixture socket, wherein the engagement portion of a dental component is adapted to be received in said socket. Exemplified alternatives have taught that the recesses may be provided on an external wall of a head portion which is to be enclosed by a dental component connectible to the fixture. Although this internal/external distinction has been made between socket and head portion, it should be noted that a head portion does not necessarily have an outer wall for receiving the engagement portion. On the contrary, a head portion may be provided with an internal socket. Thus, any one of the above exemplified embodiments discussing a socket may be in the form of a socket in a head portion of a dental fixture.

The fixture may be used in a one stage procedure or a two stage procedure. In a one stage procedure a healing or temporary abutment is connected to the fixture to form the gingival tissue, and after a healing period the healing or temporary abutment is replaced by a permanent abutment. For a two stage procedure the fixture is provided with a cover screw and the gingival tissue is sutured over the fixture and cover screw, and after a healing period the tissue is opened up and an abutment is connected to the fixture after removal of the cover screw.

The fixture may have a conically tapering end portion which tapers towards the coronal end. The axial extent of this coronal end portion is small compared to the total length of the fixture, as an example no more than 4 % of the total length, such as in the range of 1.5% -3.7%. The coronal end portion may suitably be provided without a threaded surface, e.g. having a smooth or a roughened (such as blasted) surface.

As previously discussed with regard to the various aspects of the invention, the fixture may have a substantially flat coronal end surface which is perpendicular to the longitudinal axis of the fixture. Alternatively, the coronal end surface may have a sloped contour relative to the longitudinal axis of the fixture, e.g. such that when positioned within the jawbone the length of the fixture is larger on a lingual side and shorter on a buccal side of the fixture. Another alternative is a saddle-shaped or wave-like coronal end surface.

The length of the dental fixture may be in the range of 5-19 mm, depending on the clinical situation. The outer diameter of the dental fixture may suitably be in the range of 2-6 mm, such as 3-5 mm.

The fixture may be substantially cylindrical or slightly tapering from the coronal end towards the apical end. If the fixture has a slight tapering, the core of the fixture and the outer periphery defined by e.g. thread tops may have the same or different angle of taper. Furthermore, the core of the fixture may be cylindrical while the thread tops describe a conicity or, conversely, the core of the fixture may be tapered while the thread tops describe a generally cylindrical geometry. Alternatively, the fixture may comprise a combination of one or more cylindrical and/or one or more tapering portions. Thus, one or more portions of the fixture may have e.g. thread tops lying in a common imaginary cylindrical surface, which cylindrical surface is parallel with the longitudinal axis of the fixture. Alternatively or additionally, one or more portions of the fixture may have thread tops lying in an imaginary conical surface which in the apical direction is tapering towards the longitudinal axis.

The externally threaded fixture may comprise one or more thread spirals.

The term "pitch" is used to indicate the axial distance between adjacent tops of a threading. The term "lead" is used to indicate the distance advanced parallel to the longitudinal axis when the fixture is turned one revolution, i.e. it corresponds to the pitch multiplied with the number of thread spirals. For a single thread spiral having a constant pitch, the lead is equal to the pitch; for a double thread spiral, the lead is twice the pitch.

The term "microthread" is used to indicate a thread having a height which is no greater than 0.2 mm. According to at least one example embodiment, the fixture is provided with microthreads having a height in the range of 0.02-0.2 mm, such as 0.05-.015 mm, for instance 0.1 mm. The term "macrothread" is used to indicate a thread having a height which is greater than 0.2 mm. According to at least one example embodiment, the fixture is provided with macrothreads having a height in the range of 0.25-0.35 mm, such as 0.3 mm.

Suitably, microthreads may be located coronally of macrothreads. For instance, microthreads may be arranged to engage dense cortical bone and macrothreads may be arranged to engage porous spongious/cancellous bone. The lead of a microthread suitably corresponds to the lead of a macrothread. The macrothread pitch may, as an example, be 2-4 times, such as 3 times, the pitch of the microthreads. The pitch (top-to-top spacing) at a fixture portion provided with microthreads may be around 0.20-0.24 mm. The pitch (top-to-top spacing) at a fixture portion provided with macrothreads may be around 0.60-0.72 mm.

Microthreads can be regarded as defined, oriented roughness. A non-oriented roughness having smaller dimensions, for instance obtained by blasting, etching, etc., may be superimposed on microthreads as well as on macrothreads.

A thread profile comprises two flanks, a top radius R, at the apex formed between the intersection of said two flanks, a bottom radius r formed between two adjacent threads, said flanks forming an angle v with a plane which is perpendicular to a cross section of said thread and perpendicular to a plane which is a tangent to the surface of the fixture body, said profile further having a height D. Suitably for 10° ≤ v < 35 °, R is greater than 0.4 x D and, for 35° ≤ v < 55 °, R is greater than 0.2 x D.

### Brief description of the drawings

Figs. 1 and 2 illustrate an implant assembly according to at least one example embodiment of the invention.
Fig. 3 illustrates an implant assembly according to at least one other example embodiment of the invention.
Fig. 4 illustrates a driver engaging a fixture.
Figs. 5a-5c illustrate three different conceivable cross-sections of the driver/fixture interface in Fig. 4, in accordance with at least some example embodiments of the invention.
Fig. 6a illustrates a cross-section of a dental component according to at least one example embodiment which does not form part of the invention.
Fig. 6b illustrates, in accordance with at least one example embodiment which does not form part of the invention, a cross-section of a fixture which can receive the dental component of Fig. 6a in eight different indexing positions.
Fig. 6c illustrates, in accordance with at least one example embodiment which does not form part of the invention, a cross-section of a fixture which can receive the dental component of Fig. 6a in only one indexing position.
Fig. 7 illustrates a cross-section of a dental component according to at least one other example embodiment which does not form part of the invention.
Fig. 8 illustrates a cross-section of a dental component according to at least one other example embodiment which does not form part of the invention.
Fig. 9 illustrates a cross-section of a dental component according to at least one other example embodiment which does not form part of the invention.
Fig. 10 illustrates a cross-section of a dental component according to at least one other example embodiment which does not form part of the invention.
Fig. 11 illustrates a cross-section of a dental component according to at least one other example embodiment of the invention.
Figs. 12a and 12b illustrate, in accordance with at least one example embodiment which does not form part of the invention, a fixture which can receive a dental component in only one indexing position.
Fig. 13a schematically illustrates an indexing portion of a dental fixture according to at least one example embodiment of the invention.
Fig. 13b illustrates in cross-section, in accordance with at least one example embodiment of the invention, a dental component connected to the fixture of Fig. 13a. The dental component can only be arranged in one indexing position.
Fig. 13c illustrates in cross-section, in accordance with at least one example embodiment of the invention, another dental component connected to the fixture of Fig. 13a. The dental component can be arranged in a plurality of indexing positions.
Fig. 13d illustrates in cross-section, in accordance with at least one example embodiment of the invention, yet another dental component connected to the fixture of Fig. 13a. The dental component can only be arranged in one indexing position.

### Detailed description of the drawings

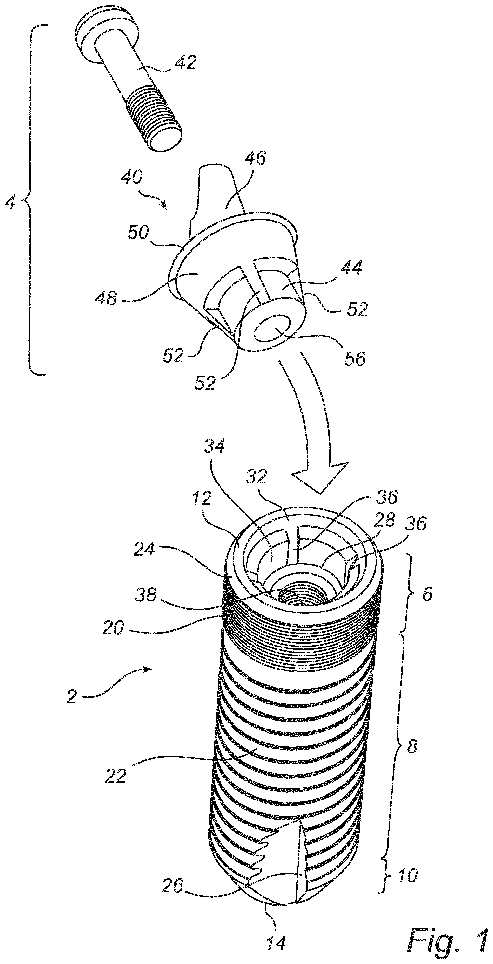

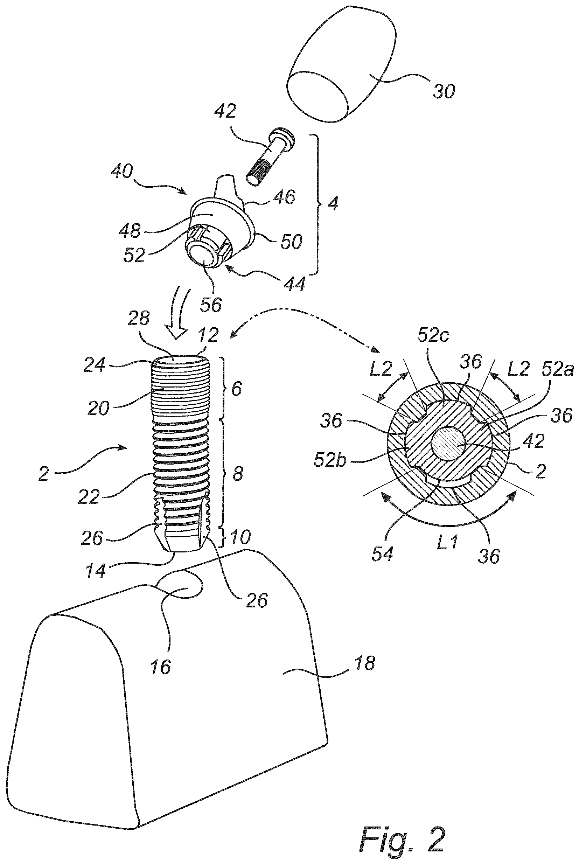

Figs. 1 and 2 illustrate an implant assembly according to at least one example embodiment of the invention. The implant assembly comprises a dental fixture 2 and a dental component 4, herein illustrated as a two-piece abutment.

The herein illustrated fixture 2 has a coronal portion 6 extending apically from a coronal end 12 of the fixture 2, and an apical portion 10 extending coronally from an apical end 14 of the fixture. An intermediate portion 8 extends between the coronal portion 6 and the apical portion 10.

The apical portion 10 has a conicity tapering towards the apical end 14 of the fixture 2 to ease insertion of the fixture 2 into a bore-hole 16 in the jawbone 18. The angle of taper relative to the longitudinal axis of the fixture 2 may, for instance, be about 10º-20º, such as 15º. Although Figs. 1 and 2 illustrate a non-threaded apical portion 10, in an alternative embodiment the apical portion of the fixture may be provided with an external thread. Whether provided with thread or not, the apical portion 10 may optionally, similarly to the coronal 6 and/or the intermediate portion 8, further be provided with a blasted, etched or otherwise roughened surface structure.

The fixture 2 has a core from which a surface structure projects, in the illustrated example being in the form of threads.

The coronal portion 6 is herein illustrated as being at least partly provided with microthreads 20, having three thread spirals, although another number is conceivable, such as 1, 2, 4 or more spirals. Although microthreads 20 have been illustrated, according to at least an alternative example embodiment the coronal portion is at least partly provided with macrothreads 22, similarly to the intermediate portion 8, either as a separate thread spiral or as a continuation of the thread spiral at the intermediate portion 8. According to at least another alternative example embodiment, instead of microthreads, the coronal portion may be provided with a plurality of annular ridges, which to the naked eye could give the same visual appearance as microthreads. Other conceivable alternatives are circumferential lines of beads or non-oriented/randomly provided projections such as bulges.

In the illustrated example embodiment, the macrothreads 22 at the intermediate portion 8 has the same lead as the microthreads 20 at the coronal portion 6. However, the pitch of the macrothreads 22 is three times the pitch of the microthreads 20, since the microthreads 20 comprise three thread spirals.

The length of the herein illustrated coronal portion 6 may be about 1-2 mm, such as 1.5 mm. However, shorter or longer lengths are readily conceivable. The relative length of coronal portion 6 may also be selected from a wide range, such as 5-50% of the total length of the fixture 2, e.g. 10-20%.

The coronal portion 6 comprises a tapering end portion 24, which tapers towards the coronal end 12 of the fixture 2. The tapering end portion 24 is no more than 4% of the total length of the fixture 2. The surface of the tapering end portion 24 may be non-threaded, either smooth or blasted (or otherwise roughened).

The intermediate portion 8 comprising macrothreads 22 is herein illustrated as having one thread spiral, however, the intermediate portion 8 may alternatively have two or more thread spirals. Similarly, although illustrated as having a substantially straight cylindrical shape, the intermediate portion 8 may have a slightly tapering shape towards the apical portion 10, in which case the angle of taper may e.g. be 3º or less, such as about 1º-2º.

Cutting recesses 26 or groove extend from the apical end into the intermediate portion. The number of cutting recesses 26 may be one or more, such as two, three or four cutting recesses, suitably symmetrically positioned about the circumference of the apical end 14 of the fixture 2 for self-tapping of the fixture 2 when being screwed/rotated into the bore-hole 16 provided in the maxilla or mandible.

A socket 28 having an open end is provided in the coronal end 12 of the fixture 2. The socket 28 extends apically into the fixture 2. The socket 28 is for receiving a dental component such as the illustrated abutment 4 which will bridge the gingiva overlying the bore-hole and support/present a prosthetic part 30. However, it may also receive other dental components such as an abutment replica, a driver, a healing cap and an impression pick-up element.

Although various alternative configurations are conceivable, the socket 28 is herein illustrated as having a conical coronal section 32 and a substantially cylindrical intermediate wall section 34. Four radially extending recesses 36 are provided in the intermediate wall section 34. The recesses 36 are herein illustrated as continuations of the conical coronal section 32 and are thus apically tapering. As an alternative, the recesses may be non-tapering. Further as an alternative, the intermediate wall section 34 may be substantially conical.

The socket 28 is further provided with an internally threaded apical section 38.

The dental component 4 is herein illustrated as a two-piece abutment consisting of a body part 40 and a screw part 42. The body part 40 comprises an engagement portion 44, which is herein illustrated as having a generally cylindrical enveloping surface, although other enveloping surfaces, such as tapering, would be a conceivable alternatives. The body part 40 further comprises a dental crown-receiving or prosthesis-receiving portion 46 which extends coronally of the fixture 2 above the gingiva. An extension portion 48, herein illustrated as coronally flaring up to a shoulder 50, is intended to extend through the gingiva and is provided between the engagement portion 44 and the prosthesis-receiving portion 46.

Three primary radial projections 52 are provided sequentially in the circumferential direction of the cylindrical enveloping surface of the engagement portion 44. The primary projections 52, which in other embodiments may be present in other numbers, are herein illustrated as wedge-like and apically tapering, i.e. their radially extension is largest at their coronal end. The primary projections 52 are equally-dimensioned projections.

Reference is now made to Fig 2 and the cross-sectional illustration of the abutment/fixture interface in their assembled state. Following the circumference of the engagement portion 44, a first distance L1 separates a first primary projection 52a and a second primary projection 52b , while a second distance L2 separates said second primary projection 52b and a subsequent or third primary projection 52c. Said second distance L2 is also present between the third primary projection 52c and the first primary projection 52a. Said first distance L1 is larger than said second distance L2. The area 54 bridged by the first distance L1, i.e. opposite to the third primary projection 52c, is herein illustrated as being void of projections. However, an alternative would be to provide said area 54 with a secondary radial projection which in at least one direction is smaller than the three primary projections. The angle between the first pair of neighboring primary projections, i.e. the first 52a and the second 52b primary projections (center to center) is 180°, which is a multiple integer of the angle (90°) between any other neighboring pair of primary projections, i.e. the third 52c and either one of the first 52a or second 52b primary projections.

The body part 40 of the abutment 4 is provided with a through-hole 56, wherein the screw part 42 is adapted to be inserted into the through-hole 56 and engage an internal thread 38 of the fixture 2 in order to secure the body part 40 to the fixture 2.

In use, the fixture 2 is inserted into a bore hole 16 in a jawbone 18, as schematically illustrated in Fig. 2. Since, the coronal end 12 of the fixture 2 is flat, the fixture 2 has no preferred rotational installed position with respect to the jawbone 18. Next, the body part 40 of the abutment 4 is inserted into the installed fixture 2, by allowing the recesses 36 in the socket to receive the primary projections 52a-52c of the engagement portion. As illustrated in the cross-sectional abutment/fixture interface in Fig. 2, since there are four recesses 36, one will be left empty. Since the four recesses 36 are equally-dimensioned, or at least none of them being smaller than any one of the three primary projections 52a-52c, the body part 40 of the abutment 4 may be inserted in any one of four rotational indexing positions. The prosthesis-receiving portion 46 may be angled relative to the axis of the through hole 56. In such case, the user, such as a dentist, is able to select which one of the four indexing positions provide the best orientation for the angled prosthesis-receiving portion 46. Likewise, if the prosthesis receiving portion is designed custom-fit and has a patient-specific configuration, the user will be able to arrange the abutment 4 in a desired indexing position with respect to the fixture. Although, four recesses in the socket may be quite enough in many surgical applications, it is conceivable to provide a socket with more recesses to allow further indexing positions.

After the body part 40 has been arranged in the desired rotational indexing position relative to the fixture 2, and the projection/recess interfaces has provided a rotational lock, the screw part 42 is inserted into the internally threaded apical section 38 of the fixture 2 and is tightened. Finally, a prosthetic tooth 30 is attached to the abutment 4.

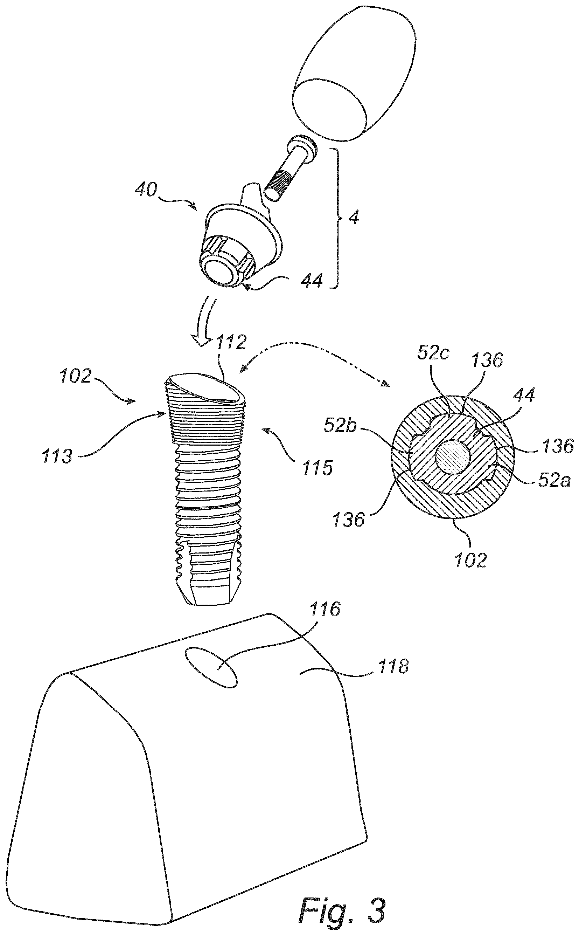

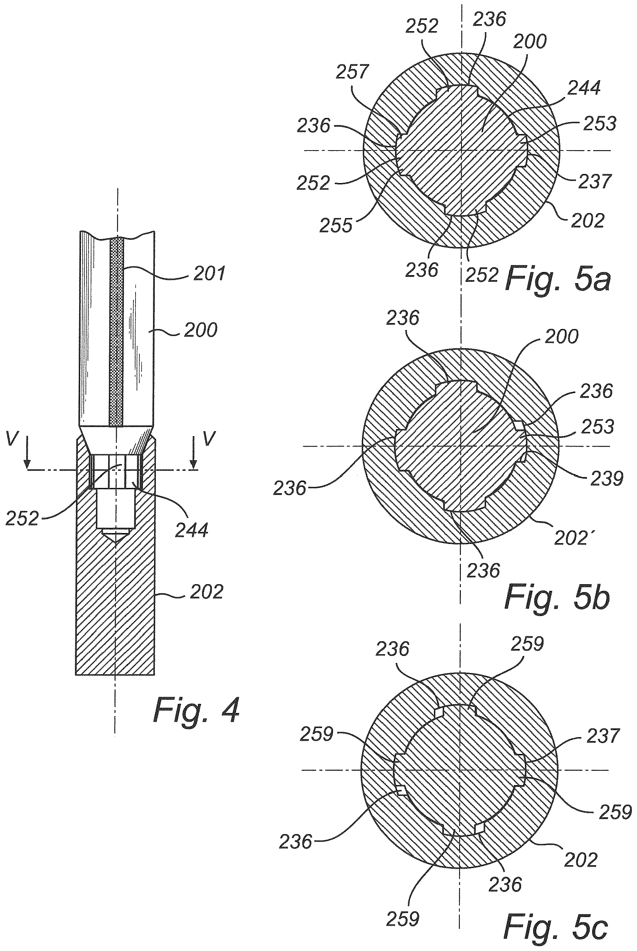

Fig. 3 illustrates an implant assembly according to at least one other example embodiment of the invention. The implant assembly comprises an abutment 4 which is identical with the abutment illustrated in Figs. 1 and 2. However, the fixture 102 in Fig. 3 is different. It has a sloped coronal end 112, wherein a lingual side 113 has a longer extension than a buccal side 115. When the fixture has been installed in a bore hole 116 in the jawbone 118, the coronal end 112 should follow the sloped contour of the jawbone 118. Thus, the fixture 102 has a desired rotational position relative to the jawbone 118. A driver 200, such as illustrated in Fig. 4, may be provided with a distinctive visual marking 201 and be received in only one indexing position relative to the fixture 102. The marking 201 will thus indicate to the user the direction of the sloping coronal end 112 as the fixture 102 is being driven into the jawbone 118 and the final rotational position of the fixture 102 may be easily adjusted when looking at the distinctive marking 201.

Continuing with Fig. 3, as illustrated in the cross-section showing the abutment/fixture interface, the fixture 102 has only three recesses 136, one for each primary projection 52a-52c on the engagement portion 44 of the abutment 4. Thus, the body part 40 of the abutment 4 can only be received in the socket in one rotational position.

If the engagement portion 44 would have had one smaller secondary projection in addition to the three primary projections, then the fixture socket would have been provided with a fourth recess large enough to receive said smaller secondary projection, but small enough to be unable to receive the three larger primary projections 52a-52c. Thus, also in this case, there would only be one possible rotational alignment of the abutment/fixture interface. Thus, the user is prevented from selecting an orientation of the abutment which would be less appropriate with regard to the specific configuration of the jawbone and the gingiva.

Fig. 4 illustrates a driver 200 engaging a fixture 202. The driver 200 is used for rotatingly driving the fixture 202 into a bore hole in the jawbone. The driver 200 may be a piece which can be used on its own, or alternatively, at its coronal end (not shown), the driver 200 may be connected to a handle, a wrench (such as a ratchet wrench), a power driver machine, etc.

The driver 200 is provided with a visually distinctive marking 201, herein illustrated as an axial line, aligned with one of the primary projections 252 at the engagement portion 244 of the driver 200. The distinctive marking 201 may have a color which is different from the rest of the driver 200, it may have different texture, or be slightly bulging, or any other appropriate viewable distinction compared to the rest of the driver 200. While the distinctive marking 201 is of limited use in connection with a fixture with no rotational limitation in the jawbone (such as the fixture in Figs 1 and 2), it is of more use in connection with a fixture having a designated rotational orientation in the jawbone (such as the fixture in Fig. 3). With the latter type of fixture, the driver 200 can only be positioned in a single rotational indexing position, meaning that each time the driver engages such a fixture, the rotational position of the distinctive marking 201 relative to the fixture will always be the same. Thus, by viewing the axial line, a user will be able to deduce the rotational position of the fixture 202 in the jawbone. Although a driver/fixture interface may be configured in the same manner as the abutment/fixture interfaces illustrated in cross-section in Figs. 2 and 3, some alternative driver/fixture interfaces will now be discussed.

Figs. 5a-5c illustrate three different conceivable cross- sections (along line V-V) of the driver/fixture interface in Fig. 4, in accordance with at least some example embodiments of the invention.

In Fig. 5a, the engagement portion of the driver is provided with three primary (herein illustrated as equally-dimensioned) projections 252 and one smaller secondary projection 253. The smaller secondary projection 253 is symmetrically arranged with respect to a direction of extension of the radius of the engagement portion (and also with respect to the radius of the fixture). Each one of the three primary projections 253 is, however, asymmetrically arranged with respect to a direction of extension of the radius. Thus, in the illustrated example embodiment, each one of the three primary projections have a larger extension 255 in the counterclockwise direction relative to the radius and a smaller extension 257 in the clockwise direction relative to the radius. It could, of course, be vice versa, i.e. larger extension in the clockwise direction and smaller in the counterclockwise direction.

This displacement or offset of projections is also reflected in the location of the recesses 236, 237 in the fixture. The recesses 236, 237 in the fixture are arranged in positions substantially corresponding to the locations of the projections 252, 253. Thus, three large recesses 236 are asymmetrically arranged with respect to the radius, while one small recess 237 is arranged symmetrically.

Because the small recess 237 can only receive the small secondary projection 253 of the four projections of the engagement portion, there is only one rotational engaging position for the driver 200 in the fixture socket. Thus, this interface would be suitable for, e.g. a slope topped fixture. It should be noted, that the single rotational position would also be obtainable without the small secondary projection and small recess, thus only having the three primary projections 252 mating the three large recesses 236, similarly to the abutment/fixture interface shown in Fig. 3. However, the presence of a fourth secondary projection 253 mating another recess 237 provides the advantage that one more projection submits a driving force to the fixture 202 when the fixture 202 is being inserted into the jawbone.

It should further be noted that the three primary projections 252 (with or without the smaller secondary projection 253) must not be evenly distributed around the circumference of the engagement portion 244. Thus, the distance between one pair of neighboring primary projections 252 is larger than the distance between any other pair (two other pairs possible) of neighboring primary projections.

In Fig. 5b, the same driver 200 is used as in Fig. 5a, however, the engaged fixture 202' is different. The fixture 202' in Fig 5b has four larger recesses 236, herein illustrated as equally-dimensioned recesses, and may suitably be present in a e.g. a flat topped fixture. Each recess 236 is asymmetrically arranged relative to a respective direction of extension of the radius of the fixture 202'. The presence of four large recesses 236 means that an abutment can later be connected to the fixture 202' in any one of four rotational position, and likewise can the driver 200 engage the fixture 202' in any rotational position. Due to the offset of the recesses 236, the small secondary projection 253 of the driver 200 will abut a side wall 239 of its receiving recess and thereby contribute in transmitting a driving force to the fixture.

It is assumed that for the interface in Fig 5b the driver 200 is rotated clockwise when inserting the fixture 202' into the jawbone. Thus, the thread spiral of the fixture 202' should be arranged such that following the spiral in the counterclockwise direction around the fixture 202' would result in a spiral path going in the coronal direction.

In Fig. 5c, the same fixture 202 is used as in Fig. 5a, i.e. three large offset recesses 236 and one small symmetrical recess 237. Fig. 5c illustrates that this fixture can also be used with a dental component such as a driver or an abutment having evenly distributed (herein illustrated as equally-dimensioned) projections 259. As shown, due to the offset of the large recesses 236, all projections 259 of the driver will engage a side wall of a respective recesses, even though the projections 259 are underdimensioned relative to the large recesses 236.

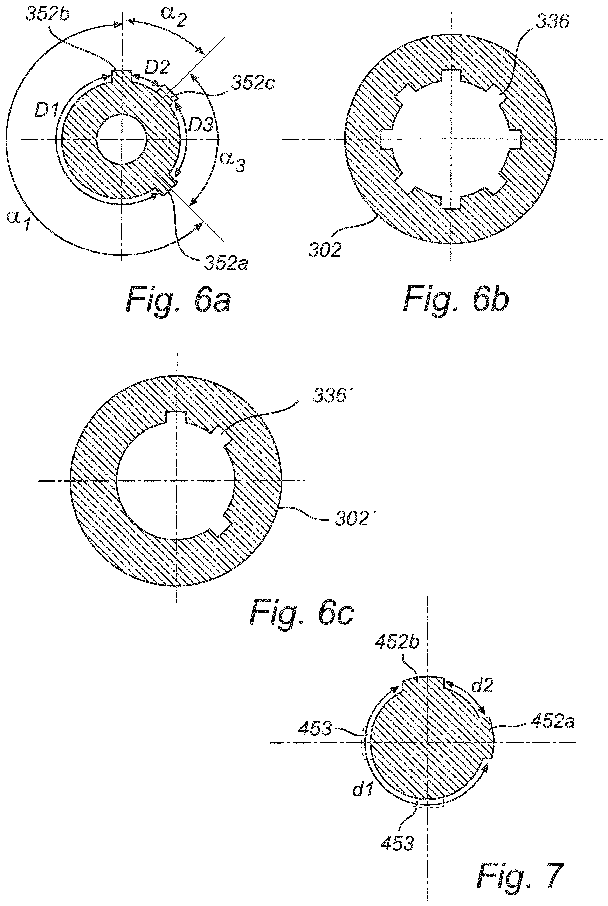

Fig. 6a-6c exemplify one of numerous variations of positions of projections and recesses.

Fig. 6a illustrates a cross-section of a dental component according to at least one example embodiment which does not form part of the invention. Although the dental component is herein illustrated as an abutment having a through hole, the arrangement of projections is equally applicable to other suggested dental components such as drivers, replicas, healing caps and an impression pick-ups.

The engagement portion of the abutment comprises three radially extending primary projections 352a-352c. Following a path (clockwise) in the circumferential direction of the engagement portion of the abutment, a first projection 352a is provided at a first angle α₁ of 225° relative to a neighboring second projection 352b (measured center to center of the projections). The first and second projections are separated by a first distance D1. The second projection 352b is provided at a second angle α₂ of 45° with respect to a neighboring third projection 352c. This pair of neighboring projections are separated by a second distance D2. The first distance D1 is larger than the second distance D2, and the first angle α₁ is a multiple integer of the second angle α₂. Finally, the third projection 352c is provided at a third angle α₃ of 90° relative to the neighboring first projection 352a. This pair of neighboring projections are separated by a third distance D3 which is smaller than said first distance D1.

Fig. 6b illustrates, in accordance with at least one example embodiment which does not form part of the invention, a cross-section of a fixture 302 which can receive the dental component of Fig. 6a in eight different indexing positions. Eight equally-dimensioned recesses 336 are evenly distributed around the inner perimeter of the socket. Thus, the number of available indexing positions is, in this case, dependent on the number of recesses.

Fig. 6c illustrates, in accordance with at least one example embodiment which does not form part of the invention, a cross-section of a fixture 302' which can receive the dental component of Fig. 6a in only one indexing position. The fixture socket has three radially projecting recesses 336' which mirror the projections of the dental component.

Fig. 7 illustrates a cross-section of a dental component according to at least one other example embodiment which does not form part of the invention. The dental component has only two (herein illustrated as equally-dimensioned) primary radial projections 452a-452b. Although, herein illustrated as being circumferentially offset, i.e. asymmetrically arranged with respect to a respective direction of extension of the radius, an alternative would be not offset, i.e. symmetrical. Following the path (clockwise) around the circumference, the first projection 452a is separated from the second projection 452b at a first distance d1. Continuing the path, a second distance d2 separates the second projection 452b from a "subsequent projection", which is actually the first projection 452a. The first distance d1 is larger than the second distance d2. Optionally, one or more smaller projections 453 may be present on the area of the engagement portion bridged by said first distance d1.

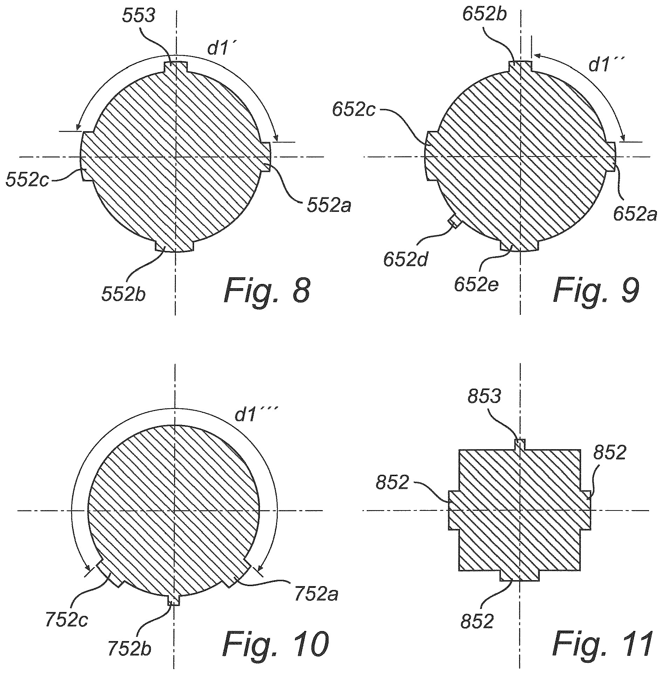

Fig. 8 illustrates a cross-section of a dental component according to at least one other example embodiment which does not form part of the invention. The dental component has four radial projections 552a-552c, 553, each having a size different from the others. Of these four radial projections the three largest projections 552a-552c are regarded as primary projections, while the smallest projection 553 is regarded as a secondary projection. The secondary projection 553 is thus located at an area presenting the largest distance d1' between two neighboring primary projections 552a and 552c. A fixture having four corresponding matching recesses will only allow the dental component to be received in one indexing position. A fixture having four suitably distributed recesses matching the size of the largest projection 552c will allow the dental component to be received in any one of four indexing positions. There are other alternatives as well. For instance, a fixture having a scalloped or saddle-shaped head may suitably be designed to allow the dental component to be received in any one of two indexing positions (i.e. rotatable 180°). The two indexing positions may be achieved by having two large recesses which can receive the largest projection 552c and which are located opposite to each other. The other two recesses are slightly smaller and are only able to receive the three smaller projections 552a, 552b and 553.

Fig. 9 illustrates a cross-section of a dental component according to at least one other example embodiment which does not form part of the invention. The dental component has in addition to four projections as illustrated in Fig. 8, an additional fifth smaller projection 652d. However, in this embodiment, all five projections 652a-652e can be regarded as primary projections. A first distance d1" separates a first primary projection 652a and a second primary projection 652b. Said first distance d1" is larger than any other distance between neighboring projections, and the engagement portion area bridged by said first distance d1" is void of projections.

Fig. 10 illustrates a cross-section of a dental component according to at least one other example embodiment of the invention. Three primary projections 752a-752c are provided. No secondary projection is present. The largest distance d1''' between neighboring primary projections 752a and 752c is void of any further projections.

Fig. 11 illustrates a cross-section of a dental component according to at least one other example embodiment of the invention. The dental component has a general square cross-section from which three primary projections 852 and one smaller secondary projection 853 are radially protruding. The dental component would fit in a corresponding generally square-shaped fixture socket with radially projecting recesses. Similarly to embodiments having a generally round or circular cross-section, there are many alternative embodiments conceivable also for generally square cross-section, or other polygonal shapes.

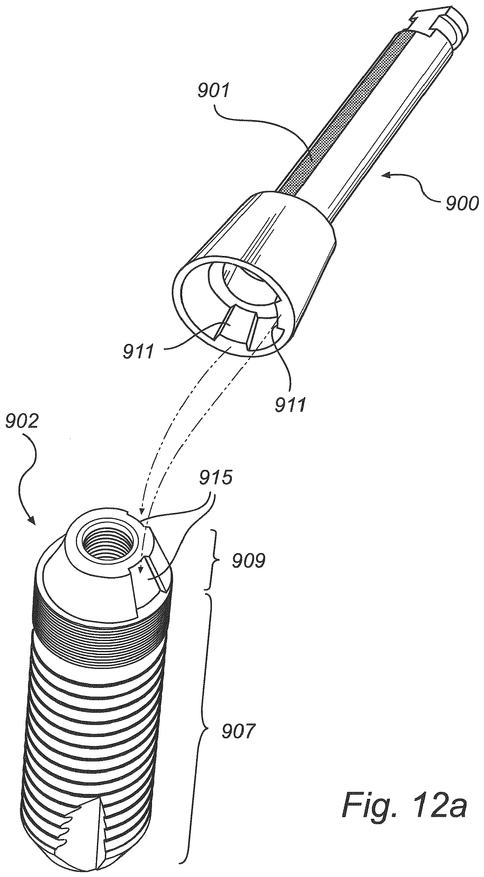

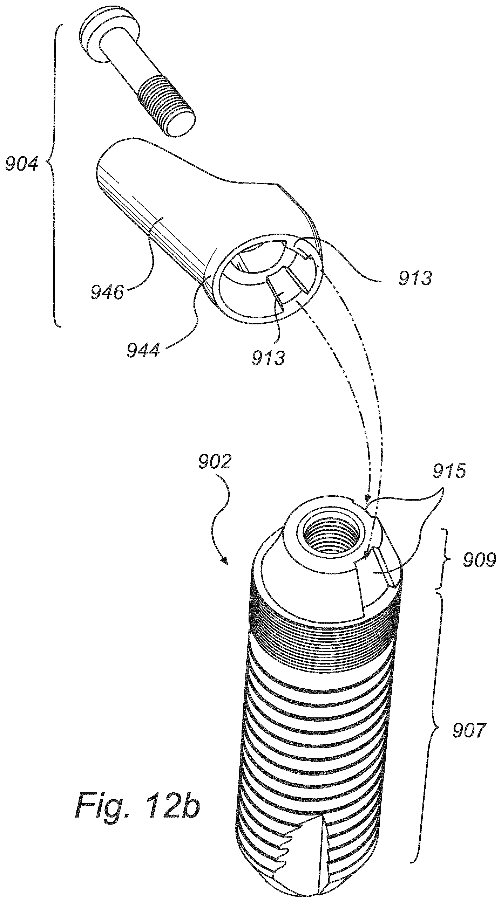

Figs. 12a and 12b illustrate, in accordance with at least one example embodiment which does not form part of the invention, a fixture 902 which can receive a dental component 900, 904 in only one indexing position. In this example a transgingival fixture 902 is illustrated. Thus, similarly to the previously illustrated fixtures, the present fixture has a bone apposition portion 907 adapted to be submerged into the bone tissue. Additionally, the present fixture has a summit portion 909 adapted to be located outside the bone. The dental component is herein illustrated in the form of a driver 900 (Fig. 12a) or an angled abutment 904 (Fig. 12b). Similarly to the dental component discussed in connection with Fig. 7, the dental components in Figs. 12a and 12b have only two (herein illustrated as equally-dimensioned) primary radial projections 911, 913. However, contrary to Fig. 7, in which the radial projections are located on an outer perimeter of the dental component, in Figs. 12a and 12b, the radial projections 911, 913 are located on an inner perimeter of the dental component, the inner perimeter defining an interior space of the dental component which is adapted to fit over the summit portion 909 of the fixture 902. The summit portion 909 of the fixture 902 has two recesses 915 configured and dimensioned to mate with the radial projections 911, 913.

The angled abutment 904 in Fig. 12b comprises an engagement portion 944 having a first longitudinal axis and a prosthesis receiving portion 946 having a second longitudinal axis. The first and second longitudinal axes are inclined at a non-zero angle relative to each other. The radial projections 913 are located on the inside of the engagement portion 944. It should be understood that suitably configured angled abutments may be used in connection with other types of fixtures as well, such as those illustrated in Figs. 1-3.

As may be seen in Fig. 12a, the driver 900 has a distinctive marking 901 which may be useful, in particular when the fixture 902 is installed obliquely into the bone. In such case an angled abutment may be connected to the fixture, to ensure that the prosthesis-receiving portion of the abutment will be correctly arranged in the jawbone, thus allowing a correct alignment of the prosthetic tooth with the surrounding teeth or correct alignment with a bridge structure. A dental professional may have a whole set of different angled abutments, each having the primary radial projections at different rotational locations relative to the inclination of the prosthesis-receiving portion. Thus, if the fixture is installed obliquely into the bone, the dental professional will realize by looking at the distinctive marking 901, the rotational position of the recesses 915, and this will help him/her to choose an angled abutment from said set of abutments which will provide the correct inclination in the oral cavity.

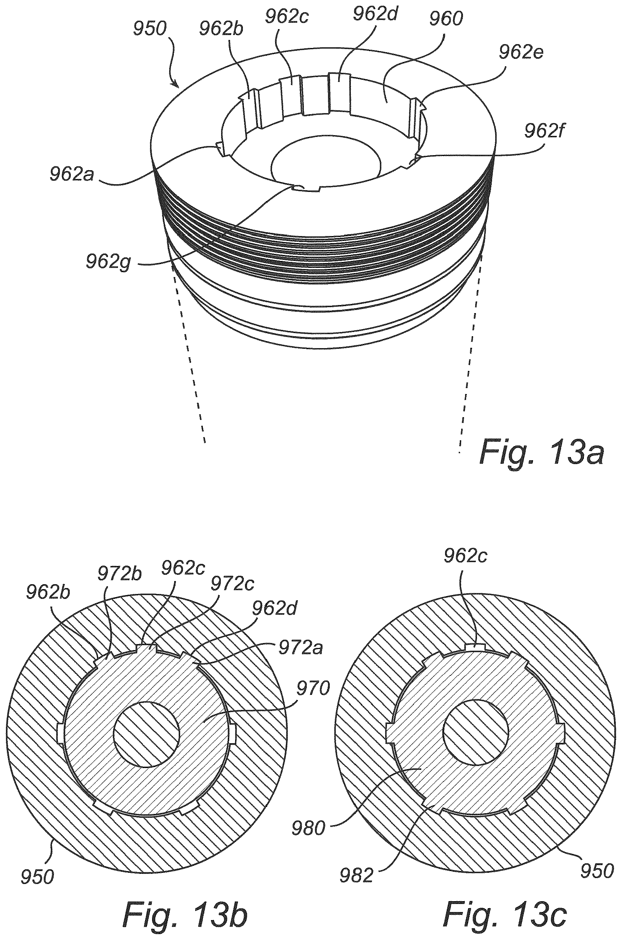

Fig. 13a schematically illustrates an indexing portion of a dental fixture 950 according to at least one example embodiment of the invention. The fixture 950 comprises a wall 960 provided with a set of seven radially extending recesses 962a-962g. Following the circumference of the wall 960, a first distance separates a first recess 962a and a second recess 962b. A second distance separates the second recess 962b and a subsequent third recess 962c, wherein said first distance is larger than said second distance. The wall area bridged by said first distance is void of recesses.

In this example embodiment, continuing along the circumference of the wall, the distance between the third recesses 962c and a fourth recesses 962d corresponds to said second distance. Similarly, the respective distance between following consecutive recesses (962d-962e; 962e-962f; 962f -962g; 962g-962a) corresponds to said first distance. In other words, the first, second, fourth, fifth, sixth and seventh recesses are evenly distributed around the wall, while the third recess 962c is interposed between the second recess 962b and the fourth recess 962d.

Fig. 13b illustrates in cross-section, in accordance with at least one example embodiment of the invention, a dental component 970 connected to the fixture 950 of Fig. 13a. The dental component 970 can only be arranged in one indexing position. It has three radial primary projections 972a-972c which can only fit in said second, third and fourth recesses 962b-962d of the fixture. In other words, the dental component 970 can be regarded as having a first distance separating a first primary radial projection 972a and a second primary radial projection 972b, and a second distance separating said second primary radial projection 972b and a third primary radial projection 972c, wherein said first distance is larger than said second distance, and wherein the area bridged by said first distance is void of projections. Thus, as illustrated in Fig. 13b, the first projection 972a mates with the fourth recess 962d, the second projection 972b mates with the second recess 962b, and the third projection 972c mates with the third recess 962c. It may further be noted that, in this embodiment, the third primary radial projection 972c is interposed between the other two primary radial projections 972a, 972b and separated by the same distance from the other two primary radial projections 972a, 972b.

Fig. 13c illustrates in cross-section another dental component 980 connected to the fixture 950 of Fig. 13a. The dental component 980 can be arranged in a plurality of (namely six) indexing positions. The dental component 980 has six radially extending projections 982, which can mate with any one of the recesses except for the third recess 962c.

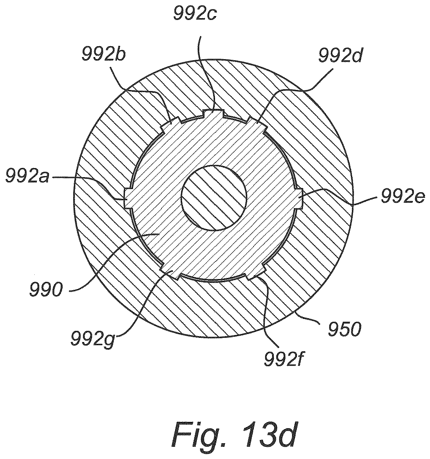

Fig. 13d illustrates in cross-section, in accordance with at least one example embodiment of the invention, yet another dental component 990 connected to the fixture 950 of Fig. 13a. The dental component 990 can only be arranged in one indexing position. It has a set of six primary radial projections 992a, 992b, 992d, 992e, 992f, 992g, which are equidistantly distributed around the circumference of the engagement portion and at least one additional primary projection 992c which is interposed between two neighboring projections 992b, 992d of said equidistantly distributed set of six primary radial projections. Thus, the dental component 990 comprises in total seven primary radial projections 992a-992g. Following the circumference of the engagement portion, a first distance separates a first primary radial projection 992a and a second primary radial projection 992b. A second distance separates the second primary radial projection 992b and a subsequent third primary radial projection 992c (i.e. said additional interposed projection), wherein said first distance is larger than said second distance. The engagement portion area bridged by said first distance is void of secondary radial projections. In this example embodiment, continuing along the circumference of the engagement portion, the distance between the third primary radial projection 992c and a fourth primary radial projection 992d corresponds to said second distance. Similarly, the respective distance between following consecutive primary radial projections (992d-992e; 992e-992f; 992f -992g; 992g-992a) corresponds to said first distance. In other words, the first, second, fourth, fifth, sixth and seventh primary radial projections 992a, 992b, 992d, 992e, 992f, 992g are evenly distributed around the wall, while the third primary radial projection 992c is interposed between the second primary radial projection 992b and the fourth primary radial projection 992d.

In the drawings of this specification, the primary projections and the secondary projections of the dental components, as well as the corresponding recesses in the fixtures, have been illustrated as being substantially rectangular. However, it should be understood that such projections and recesses may have other alternative shapes. For instance, they may be angled, trapezoid, triangular curved, rounded, etc.

## Claims

1. A dental component (4, 200, 990), comprising an engagement portion (44, 244) for engaging the dental component with a dental fixture (2, 202) adapted to be inserted into a jawbone, the engagement portion being provided with at least two equally-dimensioned primary radial projections (52, 252, 852, 992a-992g) which are distributed along the circumference of the engagement portion and which are adapted to be received in corresponding recesses (36, 136, 236, 962a-962g) provided in the fixture,
wherein, following the circumference of the engagement portion, a first distance (L1) separates a first primary radial projection (52a) and a second primary radial projection (52b), and a second distance (L2) separates said second primary radial projection (52b) and a subsequent primary radial projection (52c), wherein said first distance is larger than said second distance, and
wherein the engagement portion area (54) bridged by said first distance is either void of projections or provided with a secondary radial projection (253, 853) which in at least one direction is smaller than each one of said primary radial projections, **characterized in that** the engagement portion is provided with a set of primary radial projections (52a, 52b, 252, 992a, 992b, 992d, 992e, 992f, 992g), which are equidistantly distributed around the circumference of the engagement portion and at least one additional primary radial projection (52c, 252, 992c) which is interposed between two neighboring projections of said equidistantly distributed set of primary radial projections.

2. The dental component (4, 200, 990) as claimed in claim 1, wherein the engagement portion (44, 244) is provided with a plurality of said primary radial projections (52, 252, 852, 992a-992g) distributed along the circumference of the engagement portion, wherein said first distance separates a first pair of neighboring primary projections, and said second distance separates any other pair of neighboring primary projections, wherein, between said first pair of neighboring projections, the engagement portion is either void of projections or provided with a secondary radial projection (253, 853) which in at least one direction is smaller than said primary radial projections.

3. The dental component (4, 200, 990) as claimed in any one of claims 1-2, wherein the engagement portion (44, 244) comprises a wall portion from which said primary projections (52, 252, 852, 992a-992g) project radially, wherein, following the circumference of the wall portion,
a first axis extending from the centre of the engagement portion to said first projection forms a first angle relative to a second axis extending from the centre of the engagement portion to said second projection,
whereas said second axis forms a second angle relative to a subsequent axis extending from the centre of the engagement portion to said subsequent projection,
wherein the first angle is a multiple integer of said second angle.

4. The dental component (4, 200, 990) as claimed in any one of claims 1-3, wherein the engagement portion (44, 244) is provided with at least three of said primary radial projections (52, 252, 852, 992a-992g), one (52c, 252, 992c) of which is interposed between the other two and separated by the same distance from the other two.

5. The dental component (4, 990) as claimed in any one of claims 1-4, being a component selected from the group consisting of an abutment, an abutment replica, an abutment blank, a driver, a healing cap and an impression pick-up element.

6. The dental component (4, 990) as claimed in any one of claims 1-5, being in the form of an abutment comprising a body part (40) and a screw part (42), wherein the body part comprises
- said engagement portion (44),
- a prosthesis-receiving portion (46) which extends coronally of the fixture, and
- a through hole (56) extending through the body part,
wherein the screw part is adapted to be inserted into the through hole and engage an internal thread (38) of the fixture (2) in order to secure the body part to the fixture.

7. The dental component as claimed in claim 5 or 6, being in the form of an angled abutment in which the engagement portion has a first longitudinal axis and the prosthesis-receiving portion has a second longitudinal axis, wherein the first and second longitudinal axes are inclined at a non-zero angle relative to each other.

8. The dental component as claimed in any one of claims 1-5, being in the form of a driver (200) for driving the fixture (202) into the jawbone, wherein the driver is provided with a distinctive mark (201) to indicate to a user the rotational position of the fixture relative to the jawbone as the fixture is being driven into the jawbone.

9. A dental fixture (2, 202, 950) for insertion into a jawbone, comprising a wall provided with a set of at least two equally-dimensioned radially extending recesses (36, 136, 236, 962a-962g), wherein the recesses are arranged along the circumference of the wall, each recess being configured to receive any one of at least two primary radial projections (52, 252, 852, 992a-992g) provided on an engagement portion of a dental component (4, 200, 990),
wherein, following the circumference of the wall, a first distance separates a first recess and a second recess of said set of recesses, and a second distance separates said second recess and a subsequent recess of said set of recesses, wherein said first distance is larger than said second distance,
wherein the wall area bridged by said first distance is either void of recesses or provided with a radially extending different recess which in at least one direction is smaller than each one of the recesses in said set of recesses, **characterized in that**
said wall is provided with a set of radially extending recesses (36, 136, 236, 962a, 962b, 962d, 962e, 962f, 962g), which are equidistantly distributed around the circumference of the wall and at least one additional radially extending recess (136, 962c) which is interposed between two neighboring recesses of said equidistantly distributed set of radially extending recesses.

10. The dental fixture (2, 202, 950) as claimed in claim 9, wherein said set of recesses (36, 136, 236, 962a-962g) comprises a plurality of radially extending recesses distributed along the circumference of the wall,
wherein said first distance separates a first pair of neighboring recesses, and said second distance separates any other pair of neighboring recesses,
wherein, between said first pair of neighboring recesses, the wall is either void of recesses or provided with a radially extending different recess which in at least one direction is smaller than any recess in said set of recesses.

11. The dental fixture (2, 202, 950) as claimed in any one of claims 9-10,
wherein, following the circumference of the wall,
a first radial axis extending from a central longitudinal axis to said first recess forms a first angle relative to a second radial axis extending from the central axis to said second recess,
whereas said second radial axis forms a second angle relative to a subsequent radial axis extending from the central axis to said subsequent recess,
wherein the first angle is a multiple integer of said second angle.

12. The dental fixture (2, 202, 950) as claimed in any one of claims 9-11,
wherein said wall is provided with a set of at least three radially extending recesses (36, 136, 236, 962a-962g), one of which is interposed between the other two and separated by the same distance from the other two.

13. A dental implant assembly, comprising a dental component (4, 200, 990) as claimed in any one of claims 1-8 and a fixture (2, 202, 950) as claimed in any one of claims 9-13, wherein the dental component only has one possible indexing position relative to the fixture.

14. A dental implant assembly, comprising a dental component (4, 200, 990) as claimed in any one of claims 1-8 and a fixture (2, 202, 950) comprising a wall provided with a plurality of radially extending recesses, wherein the recesses are arranged sequentially along the circumference of the wall, each recess being shaped to receive one of said plurality of primary projections provided on the engagement portion of the dental component, wherein the number of said recesses is higher than the number of said primary projections, thereby enabling the dental component to be positioned in any one of a plurality of indexing positions relative to the fixture.

## Patentansprüche

1. Zahnkomponente (4, 200, 990), umfassend einen Eingriffsabschnitt (44, 244) zum Eingriff der Zahnkomponente mit einer Zahnbefestigung (2, 202), die zum Einsetzen in einen Kieferknochen geeignet ist, wobei der Eingriffsabschnitt mit mindestens zwei gleich dimensionierten primären radialen Vorsprüngen (52, 252, 852, 992a-992g) versehen ist, die über den Umfang des Eingriffsabschnitts verteilt sind und die in entsprechenden Aussparungen (36, 136, 236, 962a-962g) aufgenommen werden können, die in der Befestigung vorgesehen sind,
wobei dem Umfang des Eingriffsabschnitts folgend ein erster Abstand (L1) einen ersten primären radialen Vorsprung (52a) und einen zweiten primären radialen Vorsprung (52b) trennt, und ein zweiter Abstand (L2) trennt den zweiten primären radialen Vorsprung (52b) und einen nachfolgenden primären radialen Vorsprung (52c), wobei der erste Abstand größer als der zweite Abstand ist und wobei der, durch den ersten Abstand überbrückte Eingriffsbereich (54) entweder frei von Vorsprüngen ist oder mit einem sekundären radialen Vorsprung (253, 853) versehen ist, der in mindestens einer Richtung kleiner ist als jeder der primären radialen Vorsprünge, **dadurch gekennzeichnet, dass** den Eingriffsabschnitt mit einem Satz von primären radialen Vorsprüngen (52a, 52b, 252, 992a, 992b, 992d, 992e, 992f, 992g) versehen ist, die äquidistant über den Umfang des Eingriffsabschnitts verteilt sind, und mindestens einem zusätzlichen primären radialen Vorsprung (52c, 252, 992c), der zwischen zwei benachbarten Vorsprüngen des äquidistant verteilten Satzes aus primären radialen Vorsprüngen eingefügt ist.

2. Zahnkomponente (4, 200, 990) nach Anspruch 1, wobei der Eingriffsabschnitt (44, 244) mit einer Vielzahl primärer radialer Vorsprünge (52, 252, 852, 992a-992g) versehen ist, die entlang des Umfangs des Eingriffsabschnitts verteilt sind, wobei der erste Abstand ein erstes Paar benachbarter primärer Vorsprünge trennt, und der zweite Abstand jedes andere Paar benachbarter primärer Vorsprünge trennt, wobei zwischen dem ersten Paar benachbarter Vorsprünge den Eingriffsabschnitt entweder frei von Vorsprüngen ist oder mit einem sekundären radialen Vorsprung (253, 853) versehen ist, der in mindestens einer Richtung kleiner als die primären radialen Vorsprünge ist.

3. Zahnkomponente (4, 200, 990), nach einem der Ansprüche 1-2, wobei der Eingriffsabschnitt (44, 244) einen Wandabschnitt umfasst, aus dem die Primärvorsprünge (52, 252, 852, 992a-992g) radial herausragen,
wobei, dem Umfang des Wandabschnitts folgend,
eine erste Achse, die sich von der Mitte des Eingriffsabschnitts zu dem ersten Vorsprung erstreckt, einen ersten Winkel relativ zu einer zweiten Achse bildet, die sich von der Mitte des Eingriffsabschnitts zu dem zweiten Vorsprung erstreckt,
wobei die zweite Achse einen zweiten Winkel relativ zu einer Folgeachse bildet, die sich von der Mitte des Eingriffsabschnitts bis zu dem nachfolgenden Vorsprung erstreckt,
wobei der erste Winkel eine mehrfache ganze Zahl des zweiten Winkels ist.

4. Zahnkomponente (4, 200, 990), nach einem der Ansprüche 1-3, wobei der Eingriffsabschnitt (44, 244) mit mindestens drei der primären radialen Vorsprünge (52, 252, 852, 992a-992g) versehen ist, von denen einer (52c, 252, 992c) zwischen den anderen beiden angeordnet und durch den gleichen Abstand von den anderen beiden getrennt ist.

5. Zahnkomponente (4, 990), nach einem der Ansprüche 1-4, ist eine Komponente, ausgewählt aus der Gruppe bestehend aus einem Abutment, einem Abutmentabdruck, einem Abutmentrohling, einem Treiber, einer Einheilkappe und einem Abdruckaufnahmeelement.

6. Zahnkomponente (4, 990), nach einem der Ansprüche 1-5, in Form eines Abutments, das ein Gehäuseteil (40) und ein Schraubenteil (42) umfasst, wobei das Gehäuseteil
- den Eingriffsabschnitt (44),
- ein Prothesenaufnahmeteil (46), das sich koronal von der Befestigung erstreckt und
- ein Durchgangsloch (56), das sich durch das Gehäuseteil erstreckt, umfasst, wobei das Schraubenteil geeignet ist in das Durchgangsloch eingeführt zu werden und mit einem Innengewinde (38) der Besfestigung (2) einzurasten, um das Gehäuseteil an der Halterung zu sichern.

7. Zahnkomponente, nach Anspruch 5 oder 6, in Form eines abgewinkelten Abutments, bei dem der Eingriffsabschnitt eine erste Längsachse und das Prothesenaufnahmeteil eine zweite Längsachse umfasst, wobei die erste und die zweite Längsachse in einem Winkel ungleich Null relativ zueinander geneigt sind.

8. Zahnkomponente, nach einem der Ansprüche 1-5, in Form eines Treibers (200) zum Eintreiben der Befestigung (202) in den Kieferknochen, wobei der Treiber mit einem Unterscheidungsmerkmal (201) versehen ist, um dem Anwender die Drehposition der Befestigung relativ zum Kieferknochen anzuzeigen, wenn die Befestigung in den Kieferknochen eingetrieben wird.

9. Zahnbefestigung (2, 202, 950) zum Einsetzen in einen Kieferknochen, umfassend eine Wand mit einem Satz von mindestens zwei gleichgroßen, radial verlaufenden Aussparungen (36, 136, 236, 962a-962g), wobei die Aussparungen entlang des Umfangs der Wand angeordnet sind, wobei jede Aussparung so konfiguriert ist, dass sie einen von mindestens zwei primären radialen Vorsprüngen (52, 252, 852, 992a-992g) aufnimmt, die an einem Eingriffsabschnitt einer Zahnkomponente (4, 200, 990) angebracht sind,
wobei, dem Umfang der Wand folgend, ein erster Abstand eine erste Aussparung und eine zweite Aussparung des Satzes von Aussparungen trennt, und ein zweiter Abstand die zweite Aussparung und eine nachfolgende Aussparung des Satzes von Aussparung trennt, wobei der erste Abstand größer ist als der zweite Abstand, wobei die durch den ersten Abstand überbrückte Wandfläche entweder frei von Aussparungen ist oder mit einer sich radial verlaufenden unterschiedlichen Aussparung versehen ist, die in mindestens einer Richtung kleiner ist als jede der Aussparungen in dem Satz von Aussparungen, **dadurch gekennzeichnet,**
**dass** die Wand mit einem Satz von sich radial verlaufenden Aussparungen (36, 136, 236, 962a, 962b, 962d, 962e, 962f, 962g) versehen ist, die über den Umfang der Wand äquidistant verteilt sind, und mindestens einer zusätzlichen radial verlaufenden Aussparung (136, 962c), die zwischen zwei benachbarten Aussparungen des äquidistant verteilten Satzes von radial verlaufenden Aussparungen eingefügt ist.

10. Zahnbefestigung (2, 202, 950) nach Anspruch 9, wobei das Set von Aussparungen (36, 136, 236, 962a-962g) eine Vielzahl von radial verlaufenden Aussparungen, die entlang des Umfangs verteilt sind, umfasst,
wobei der erste Abstand ein erstes Paar benachbarter Aussparungen trennt und der zweite Abstand jedes andere Paar benachbarter Aussparungen trennt,
worin die Wand zwischen dem ersten Paar benachbarter Aussparungen entweder ohne Aussparungen oder mit einer radial verlaufenden anderen Aussparung versehen ist, die in mindestens einer Richtung kleiner ist als jede Aussparung in diesem Satz Aussparungen.

11. Zahnbefestigung (2, 202, 950), nach einem der Ansprüche 9-10,
wobei, dem Umfang der Wand folgend,
eine erste radiale Achse, die von einer zentralen Längsachse zu der ersten Aussparung verläuft, einen ersten Winkel relativ zu einer zweiten radialen Achse bildet, die von der zentralen Achse zu der zweiten Aussparung verläuft,
wobei die zweite Radialachse einen zweiten Winkel relativ zu einer nachfolgenden Radialachse bildet, die von der zentralen Achse zu der nachfolgenden Aussparung verläuft,
wobei der erste Winkel eine mehrfache ganze Zahl des zweiten Winkels ist.

12. Zahnbefestigung (2, 202, 950), nach einem der Ansprüche 9-11, wobei die Wand mit einem Satz von mindestens drei radial verlaufenden Aussparungen (36, 136, 236, 962a-962g) ausgestattet ist, eine davon ist zwischen den beiden anderen angeordnet und durch den gleichen Abstand von den beiden anderen getrennt.

13. Zahnimplantatanordnung, umfassend eine Zahnkomponente (4, 200, 990) nach einem der Ansprüche 1-8 und eine Zahnbefestigung (2, 202, 950), nach einem der Ansprüche 9-13, wobei die Zahnkomponente nur eine mögliche Rastposition relativ zur Befestigung aufweist.

14. Zahnimplantatanordnung, umfassend eine Zahnkomponente (4, 200, 990), nach einem der Ansprüche 1-8, und eine Befestigung (2, 202, 950), die eine Wand umfasst, die mit einer Vielzahl von sich radial verlaufenden Aussparungen versehen ist, wobei die Aussparungen nacheinander entlang des Umfangs der Wand angeordnet sind, wobei jede Aussparung so geformt ist, dass sie eine der Vielzahl von Primärvorsprüngen aufnimmt, die auf dem Eingriffsabschnitt der Zahnkomponente vorgesehen sind, wobei die Anzahl der Aussparungen höher ist als die Anzahl der Primärvorsprünge, wodurch die Zahnkomponente in einer von einer Vielzahl an Rastpositionen relativ zu der Vorrichtung positioniert werden kann.

## Revendications

1. Composant dentaire (4, 200, 990), comprenant une section d'engagement (44, 244) destinée à l'engagement du composant dentaire dans un appareil dentaire (2, 202) apte à être inséré dans un maxillaire, la section d'engagement étant pourvue d'au moins deux saillies radiales primaires (52, 252, 852, 992a-992g) de dimensions égales qui sont réparties le long de la circonférence de la section d'engagement et qui sont aptes à être reçues dans des retraits correspondants (36, 136, 236, 962a-962g) pratiqués dans l'appareil,
dans lequel, en suivant la circonférence de la section d'engagement, une première distance (L1) sépare une première saillie radiale primaire (52a) et une seconde saillie radiale primaire (52b), et une seconde distance (L2) sépare ladite seconde saillie radiale primaire (52b) et une saillie radiale primaire suivante (52c), la première distance étant supérieure à dite seconde distance, et
la zone de section d'engagement (54) couverte par la première distance est soit exempte de saillies, soit pourvue d'une saillie radiale secondaire (253, 853) qui, dans au moins un sens, est plus réduite que chacune desdites sections radiales primaires, **caractérisé en ce que** la section d'engagement est pourvue d'un ensemble de saillies radiales primaires (52a, 52b, 252, 992a, 992b, 992c, 992d, 992e, 992f, 992g) qui sont réparties à équidistance autour de la circonférence de la section d'engagement et au moins une saillie radiale primaire supplémentaire (52c, 252, 992c) qui est interposée entre deux saillies voisines dudit ensemble de saillies radiales primaires réparties à équidistance.

2. Composant dentaire (4, 200, 990) selon la revendication 1, dans lequel la section d'engagement (44, 244) est pourvue d'une pluralité dedites saillies radiales primaires (52, 252, 852, 992a-992g) réparties le long de la circonférence de la section d'engagement, la première distance séparant une première paire de saillies primaires voisines, et ladite seconde distance séparant toute autre paire de saillies primaires voisines, dans lequel, entre ladite première paire de saillies voisines, la section d'engagement est soit exempte de saillies, soit pourvue d'une seconde saillie radiale (253, 853) qui, dans un sens, est plus réduite que lesdites saillies radiales primaires.

3. Composant dentaire (4, 200, 990) selon l'une quelconque des revendications 1 à 2, dans lequel la section d'engagement (44, 244) comprend une section de paroi dont lesdites saillies radiales primaires (52, 252, 852, 992a-992g) dépassent radialement, sachant que, en suivant la circonférence de la section de paroi,
un premier axe s'étendant depuis le centre de la section d'engagement jusqu'à ladite première saillie forme un premier angle par rapport à un second axe s'étendant depuis le centre de la section d'engagement jusqu'à ladite seconde saillie,
tandis que ledit second axe forme un second angle par rapport à un axe suivant s'étendant depuis le centre de la section d'engagement jusqu'à ladite saillie suivante,
le premier angle étant un nombre entier multiple dudit second angle.

4. Composant dentaire (4, 200, 990) selon l'une quelconque des revendications 1 à 3, dans lequel la section d'engagement (44, 244) est pourvue d'au moins trois desdites saillies radiales primaires (52, 252, 852, 992a-992g), dont une (52a, 252, 992c) est interposée entre les deux autres et séparée des deux autres de la même distance.

5. Composant dentaire (4, 990) selon l'une quelconque des revendications 1 à 4, ce composant étant un composant sélectionné dans le groupe composé d'une butée, d'une réplique de butée, d'une ébauche de butée, d'un pilote, d'une coiffe et d'un élément de prise d'empreinte.

6. Composant dentaire (4, 990) selon l'une quelconque des revendications 1 à 5, prenant la forme d'une butée comprenant un élément corps (40) et un élément vis (42), l'élément corps comprenant
- ladite section d'engagement (44),
- une section de réception de prothèse un trou (46) qui s'étend au niveau coronal de l'appareil, et
- un trou traversant (56) s'étendant à travers l'élément corps,
l'élément vis pouvant être inséré dans le trou traversant et s'engager dans un filet interne (38) de l'appareil (2) afin de fixer l'élément corps à l'appareil.

7. Composant dentaire selon la revendication 5 ou 6, prenant la forme d'une butée en angle dans laquelle la section d'engagement possède un premier axe longitudinal et la section de réception de prothèse possède un second axe longitudinal, les premier et second axes longitudinaux étant inclinés suivant un angle différent de zéro l'un par rapport à l'autre.

8. Composant dentaire selon l'une quelconque des revendications 1 à 5, prenant la forme d'un pilote (200) pour entraîner l'appareil (202) dans le maxillaire, le pilote étant pourvu d'une marque distinctive (201) pour indiquer à un utilisateur la position rotationnelle de l'appareil par rapport au maxillaire lorsque l'appareil est en train d'être entraîné dans le maxillaire.

9. Appareil dentaire (2, 202, 950) destiné à être inséré dans un maxillaire, comprenant une paroi pourvue d'un ensemble de deux retraits (36, 136, 236, 962a-962g) s'étendant radialement de dimensions égales, les retraits étant répartis le long de la circonférence de la paroi, chaque retrait étant conçu pour recevoir l'une quelconque d'au moins deux saillies radiales primaires (52, 252, 852, 992a-992g) sur une section d'engagement d'un composant dentaire (4, 200, 990),
dans lequel, en suivant la circonférence de la paroi, une première distance sépare un premier retrait et un second retrait dudit ensemble de retraits, et une seconde distance sépare ledit second retrait et un retrait suivant dudit ensemble de retraits, ladite première distance étant supérieure à ladite seconde distance,
la zone de paroi couverte par ladite première distance est soit exempte de retraits, soit pourvue d'un retrait différent s'étendant radialement qui, au moins dans un sens, est plus réduit que chacun des retraits dudit ensemble de retraits, **caractérisé en ce que**
ladite paroi est pourvue d'un ensemble de retraits s'étendant radialement (36, 136, 236, 962a, 962b, 962d, 962e, 962f, 962g) qui sont répartis à équidistance autour de la circonférence de la paroi et d'au moins un retrait supplémentaire s'étendant radialement (136, 962c) qui est interposé entre deux retraits voisins dudit ensemble de retraits s'étendant radialement répartis à équidistance.

10. Appareil dentaire (2, 202, 950) selon la revendication 9, dans lequel ladite pluralité de retraits (36, 136, 236, 962a, 962a-962g) comprend une pluralité de retraits s'étendant radialement répartis le long de la circonférence de la paroi, ladite première distance séparant une première paire de retraits voisins, et ladite seconde distance séparant toute autre paire de retraits voisins,
dans lequel, entre ladite première paire de retraits voisins, la paroi est soit exempte de retraits, soit pourvue d'un retrait différent s'étendant radialement qui, dans au moins un sens, est plus réduit que tout retrait dudit ensemble de retraits.

11. Appareil dentaire (2, 202, 950) selon l'une quelconque des revendications 9 et 10, dans lequel, en suivant la circonférence de la paroi,
un premier axe radial s'étendant depuis un axe longitudinal central jusqu'au premier retrait forme un premier angle par rapport à un second axe radial s'étendant depuis l'axe central jusqu'audit second retrait,
tandis que ledit second axe radial forme un second angle par rapport à un axe radial suivant s'étendant depuis l'axe central jusqu'audit retrait suivant,
le premier angle étant un nombre entier multiple dudit second angle.

12. Appareil dentaire (2, 202, 950) selon l'une quelconque des revendications 9 à 11, dans lequel ladite paroi est pourvue d'un ensemble d'au moins trois retraits s'étendant radialement (36, 136, 236, 962a-962g) dont un est interposé entre les deux autres et séparé des deux autres de la même distance.

13. Ensemble d'implant dentaire, comprenant un composant dentaire (4, 200, 990) selon l'une quelconque des revendications 1 à 8 et un appareil (2, 202, 950) selon l'une quelconque des revendications 9 à 13, seul le composant dentaire ayant une position d'indexation possible par rapport à l'appareil.

14. Ensemble d'implant dentaire, comprenant un composant dentaire (4, 200, 990) selon l'une quelconque des revendications 1 à 8 et un appareil (2, 202, 950) comprenant une paroi pourvue d'une pluralité de retraits s'étendant radialement, les retraits étant disposés séquentiellement le long de la circonférence de la paroi, chaque retrait étant conformé pour recevoir une de ladite pluralité de saillies primaires prévues sur la section d'engagement du composant dentaire, le nombre desdits retraits étant supérieur au nombre de desdites saillies primaires, en permettant ainsi le positionnement du composant dentaire dans l'une quelconque d'une pluralité de positions d'indexation par rapport à l'appareil.
